# EUROPÄISCHE PATENTSCHRIFT

(11) **EP 3 517 459 B1**
(45) Veröffentlichungstag und Bekanntmachung des Hinweises auf die Patenterteilung: **12.07.2023**
(21) Anmeldenummer: 19154173.9
(22) Anmeldetag: 29.01.2019
(51) Int. Cl.: B65G 1/04

(54) **LAGERSYSTEM**
STORAGE SYSTEM
SYSTÈME DE STOCKAGE

(30) Priorität: 30.01.2018 DE 202018100490 U
(43) Veröffentlichungstag der Anmeldung: 31.07.2019
(73) Patentinhaber: MINDA Industrieanlagen GmbH, 32423 Minden (DE)
(72) Erfinder: Lampe, Ralf, 31683 Obernkirchen (DE)
(74) Vertreter: Gramm, Lins & Partner Patent- und Rechtsanwälte PartGmbB

(56) Entgegenhaltungen:
- EP-A1- 2 354 045
- WO-A1-2010/046809
- WO-A1-2010/090515
- WO-A1-2015/144139
- DE-A1-102011 106 667
- DE-A1-102013 102 994
- JP-A- S4 980 778
- JP-A- S56 117 902
- JP-A- S61 150 907
- JP-A- 2001 225 906
- US-A- 5 582 497

## Beschreibung

Die Erfindung betrifft ein Lagersystem zur Lagerung und Bereitstellung von Waren.

Zur Lagerung von Produkten sind sogenannte Hochregallager bekannt, bei denen Regalfächer vertikal zueinander beabstandet sind, üblicherweise sind von einem Boden ausgehend eine Vielzahl von Regalfächern übereinander und nebeneinander angeordnet, um bei einer möglichst geringen Grundfläche eine maximale Lagerfläche zu erzielen. An einer Frontseite des Hochregallagers kann ein Regalbediengerät angeordnet oder installiert sein, das entlang einer Regalgasse vor dem Hochregallager verfahrbar ist und mit dem Produkte in die einzelnen Regalfächer eingebracht und entnommen werden können. Die Produkte können als Fertigprodukte, Halbfertigprodukte oder als Rohstoffe ausgebildet sein, neben einer Anordnung der Produkte auf Paletten kann eine Lagerung sowie Entnahme und Einlagerung in die Regalfächer mit dem Regalbediengerät auch ohne Paletten erfolgen. Vorteilhaft bei einem Hochregallager sind die hohe Lagerkapazität bei einem geringen Flächenbedarf sowie der direkte Zugriff zu jedem Regalfach. Nachteilig an Hochregallagern ist eine begrenzte Durchsatzleistung des Regalbediengerätes, sodass es an Einlagerpositionen und Auslagerpositionen bei einer hohen Leistungsanforderung zu einem Stau des Materialflusses kommen kann.

Weiterhin sind aus dem Stand der Technik sogenannte Flächenlager bekannt, bei denen die Produkte am Boden liegend gelagert werden. Die einzelnen Produkte können voneinander getrennt gelagert werden, wobei die Unterteilung durch Trennelemente wie Hölzer, Rungen oder Ähnliches erfolgt. Insbesondere bei chaotischen Lagerprozessen wird die Lagerung in einer Software verwaltet. Der Vorteil eines Flächenlagers besteht insbesondere darin, dass es einfach aufgebaut ist und auf die jeweiligen Produkte ein schneller Zugriff erfolgen kann.

In einer Variante der Flächenlager werden die Produkte statt auf den Boden auf sogenannten Lagerlinien gelagert, die parallel zueinander orientiert sind, wobei auf den Lagerlinien die Produkte zwischengelagert und weitertransportiert werden. Solche Flächenlager haben einen vergleichsweise hohen Materialdurchsatz und sind vorteilhaft, wenn auf den Lagerlinien Aufträge gesammelt und in der richtigen Sequenz für die weiteren Verarbeitungsschritte aufgegeben werden.

Werden Flächenlager in mehreren Lagerstufen aufgestellt, kann mit einem Transferwagen und einer Transporteinrichtung das Produkt zwischen den einzelnen Lagerlinien verteilt und sortiert werden. Dazu können die einzelnen Lagerlinien in ihrer Längsrichtung unterbrochen sein. Der Transferwagen oder die Transporteinrichtung fährt innerhalb der Unterbrechung quer zu der Längserstreckung der Lagerlinien, nimmt von einer Lagerlinie die Waren auf und gibt diese an eine andere Lagerlinie ab. Eine solche Ausgestaltung eines Flächenlagers weist einen erhöhten Flächenbedarf auf.

Die US 5 582 497 A beschreibt ein automatisches Lager gemäß dem Oberbegriff des Anspruchs 1, mit mindestens einer Lagereinheit für die Lagerung von Artikeln, wobei jede dieser Lagereinheiten ein Nachfüllregal mit einer Vielzahl von ersten Regalen in Höhen- und Längsrichtungen für Artikel jeweils nur in einer Größe aufweist. Jeder der ersten Regale hat eine Einlassöffnung, eine Auslassöffnung und mindestens ein Unterstützungsmittel zur Lagerung des Artikels. Weiterhin ist ein Kommissionierregal mit einer Vielzahl von zweiten Regalen mit korrespondierendem Aufbau vorhanden, wobei Nachfüll- und Kommissionierregale so angeordnet sind, dass die Auslassöffnungen der ersten Regale den Einlassöffnungen der zweiten Regale gegenüberliegen. Zwischen den ersten und zweiten Regalen ist ein Korridor mit einem Verschiebemechanismus, der Artikel aus dem Nachfüllregal in das Kommissionierregal fördert, wenn eine Anzahl von Artikeln innerhalb des Kommissionierregals unter einen vorgegebenen Wert fällt. Ein Nachfüllmechanismus zum Nachfüllen der Nachfüllregale und ein Greifmechanismus für die Umlagerung der Artikel sind vorgesehen. Das Nachfüllen und das Entnehmen der Artikel erfolgt im Wesentlichen gleichzeitig.

Aufgabe der vorliegenden Erfindung ist es, ein Lagersystem bereitzustellen, das einerseits einen hohen Materialdurchsatz ermöglicht und andererseits den Flächenbedarf minimiert.

Erfindungsgemäß wird diese Aufgabe durch ein Lagersystem mit den Merkmalen des Hauptanspruches gelöst. Vorteilhafte Ausgestaltungen und Weiterbildungen der Erfindung sind in den Unteransprüchen, der Beschreibung sowie den Figuren offenbart.

Das erfindungsgemäße Lagersystem zur Lagerung und Bereitstellung von Waren sieht ein Flächenlager vor, mit mehreren ersten Lagerlinien, die eine Längserstreckung aufweisen und in einer ersten Ebene quer zu der Lagerlinien- Längserstreckung hintereinander angeordnet sind und einen ersten Lagerliniengang bilden, mit zweiten Lagerlinien, die ebenfalls eine Längserstreckung aufweisen und in einer ersten Ebene quer zu der Lagerlinien-Längserstreckung hintereinander angeordnet sind und einen zweiten Lagerliniengang bilden, wobei die beiden Lagerliniengänge beiderseits einer Regalgasse angeordnet sind. Die Lagerlinien der Lagerliniengänge, die in der Regalgasse münden und an den der Regalgasse abgewandten Enden mit einer Bestückungseinrichtung zum Beladen der ersten Lagerlinien mit Waren und einer Bestückungseinrichtung zum Entladen von Waren von den zweiten Lagerlinien gekoppelt sind, wobei die Bestückungseinrichtung entlang der Lagerliniengänge verfahrbar ist, sind mit zumindest einem Hochregallager koppelbar, wobei das Hochregallager mit zumindest einer zweiten Hochregalebene vertikal zu der ersten Ebene des Flächenlagers beabstandet neben der Regalgasse angeordnet ist und zumindest ein Regalbediengerät in der Regalgasse und entlang der Regalgasse verfahrbar angeordnet ist, wobei das Regalbediengerät ausgebildet ist, Waren zwischen den Lagerliniengängen und zwischen dem Flächenlager und dem Hochregallager zu transportieren, kombiniert, wobei die Lagerlinien in der ersten Ebene als Stetigförderer ausgebildet sinddie Lagerlinien zur Aufnahme von Waren sind, die Hochregallager oberhalb der Lagerliniengänge der beiden Flächenlager in Regalfächer unterteilt sind, die so breit sind wie ein, zwei oder mehr Lagerlinien, jedoch eine geringere Tiefe aufweisen, wobei die ersten Lagerlinien die Waren zu dem Regalbediengerät transportieren und die zweiten Lagerlinien die Waren von dem Regalbediengerät weg zu der Bestückungseinrichtung zum Entladen der Waren transportieren. Das erfindungsgemäße Lagersystem sieht ein zweistufiges Flächenlager vor, das um zumindest ein Hochregallager ergänzt wird. Das Hochregallager wird über dem Flächenlager angeordnet, grundsätzlich ist es auch möglich, dass das Flächenlager als oberstes Niveau des Lagersystems eingerichtet ist, sodass sich das Hochregallager unterhalb des Flächenlagers befindet. In einer Weiterbildung ist vorgesehen, dass das Flächenlager oberhalb und unterhalb um ein Hochregallager ergänzt ist, um die Grundfläche des Lagersystems maximal ausnutzen zu können. Über das Regalbediengerät ist es möglich, Produkte aus den Lagerlinien des Flächenregals in ein Regalfach des Hochregallagers zu bewegen und umgekehrt Waren oder Produkte aus einem Regalfach zu entnehmen und entweder in ein anderes Regalfach zu bewegen oder auf eine Lagerlinie des Flächenlagers. Von dem Flächenlager kann das jeweilige Produkt oder die jeweilige Ware entweder über das Regalbediengerät oder über die Bestückungseinrichtung von den Lagerlinien entnommen und zur Weiterverarbeitung abtransportiert werden. Dadurch ist es möglich, einerseits sehr schnell Waren aus dem Flächenlager abzutransportieren und andererseits eine große Menge an Waren aufzunehmen und in Zeiten, in denen das Regalbediengerät nicht zum Be- und Entladen des Flächenregals benötigt wird, Waren aus den Regalfächern des Hochregallagers aufzunehmen, umzusortieren und in der richtigen Reihenfolge auf Lagerlinien abzulegen oder zwischen Lagerlinien zu transportieren.

Das Hochregallager weist mehrere Hochregalebenen übereinander auf, also vertikal beabstandet zueinander, um den für das Lagersystem zur Verfügung stehenden Bauraum möglichst vollständig ausnutzen zu können.

In dem Hochregallager sind mehrere Regalfächer in Lagerlinienlängserstreckung und/oder entlang der Regalgasse hintereinander in einer Hochregalebene angeordnet. Von der Regalgasse ausgehend können somit Fächer unterschiedlicher Tiefe sich von der Regalgasse weg erstrecken. Bevorzugt sind die Regalfächer über den jeweiligen Lagerlinien angeordnet, wobei die Anzahl der Regalfächer entlang der Regalgasse der Anzahl der Lagerlinien entlang der Regalgasse bevorzugt entspricht. So wird der Bauraum über jede Lagerlinie optimal ausgenutzt, indem über oder unter der jeweiligen Lagerlinie Regalfächer in mehreren Ebenen oder mehreren Etagen angeordnet werden.

Eine Weiterbildung der Erfindung sieht vor, dass beiderseits zur Regalgasse ein Hochregal vertikal beabstandet zu dem Flächenlager angeordnet ist. Somit ergibt sich beiderseits der Regalgasse der Anordnung von je einem Flächenlager und einem Hochregallager in Kombination, sodass es möglich ist, von der der Regalgasse abgewandten Seite das Flächenregal zu bestücken, beispielsweise durch eine entlang der Lagerliniengänge verfahrbar gelagerte Bestückungseinrichtung, von wo aus die Ware zu der Regalgasse entlang der Regallinie transportiert wird, dort von dem Regalbediengerät aufgenommen und entweder auf eine Lagerlinie des gegenüberliegenden Flächenregals oder aber in ein Regalfach eines oberhalb der Lagerlinie, dem die Ware entnommen worden ist, angeordnetes Regalfach oder ein Regalfach auf der gegenüberliegenden Seite der Regalgasse abzulegen.

Es ist vorgesehen, dass die Lagerlinien als Stetigförderer ausgebildet sind, insbesondere als angetriebene Stetigförderer. Die Stetigförderer können als Rollenförderer, Kettenförderer und Bandförderer ausgebildet sein. Jeder Stetigförderer kann mit einem separaten Antrieb ausgebildet sein, ebenfalls ist es möglich, dass in der Bestückungseinrichtung und/oder dem Regalbediengerät ein Antrieb angeordnet ist, der mit dem Stetigförderer koppelbar ist. Wird beispielsweise die Bestückungseinrichtung vor eine Lagerlinie gefahren, kann durch eine mechanische Kopplung ein Antriebselement, beispielsweise ein Zahnrad oder ein Reibrad, in Eingriff mit einem korrespondierenden Element an dem Stetigförderer gebracht werden, sodass neben dem Warentransport von der Bestückungseinrichtung auf den Stetigförderer gleichzeitig der Stetigförderer angetrieben werden kann, um die auf dem Stetigförderer befindliche Ware entlang der jeweiligen Lagerlinie zu transportieren. Eine korrespondierende Ausgestaltung kann an dem Regalbediengerät vorhanden sein, das ebenfalls über Reibräder, Rollen oder Zahnräder mit dem Stetigförderer koppelbar ist, um beispielsweise eine Palette, die auf der Lagerlinie angeordnet ist, von der Lagerlinie herunter zu transportieren, auf das Regalbediengerät zu verlagern und von dort entweder in ein Regalfach eines Hochregallagers, eine andere Lagerlinie auf derselben Seite der Regalgasse oder auf eine Lagerlinie auf der gegenüberliegenden Seite der Regalgasse zu transportieren.

Die jeweilige Bestückungseinrichtung für die Lagerlinien ist entlang der Lagerliniengänge verfahrbar, wobei die Bestückungseinrichtung entweder an den der Regalgasse abgewandten Enden der Lagerliniengänge oder aber zwischen den Enden einer Lagerlinie eines Lagerlinienganges verfahrbar ist. Der Lagerliniengang selbst kann unterbrochen ausgebildet sein oder aber eine Möglichkeit bieten, dass über eine Bestückungseinrichtung Waren entlang eines Lagerlinienganges transportiert werden.

Die Bestückungseinrichtung und/oder das Regalbediengerät sind mit zumindest einer Handhabungseinrichtung und/oder zumindest einer Übergabeeinrichtung ausgestattet, um Waren aufzunehmen, auf die Bestückungseinrichtung und/oder das Regalbediengerät zu transportieren und von der Bestückungseinrichtung und/oder dem Regalbediengerät wieder abzuladen, beispielsweise auf einen Lagerliniengang oder in ein Regalfach. Die Handhabungs- oder Übergabeeinrichtung kann teleskopierbar ausgebildet sein, um auch Waren in einem Regalfach oder einer Lagerlinie aufnehmen zu können, die weit entfernt von der Regalgasse und/oder der Stelle, wo die Bestückungseinrichtung an der Lagerlinie befindlich ist, erfolgen kann. Die Handhabungs- und/oder Übergabeeinrichtung kann zumindest einen Längsförderer aufweisen, beispielsweise ein angetriebenes Gurtband, eine Lagerkette oder angetriebene Rollen oder Walzen, um Waren aufzunehmen oder abgeben zu können. Auch der Längsförderer kann teleskopierbar oder ausfahrbar von der Übergabeeinrichtung ausgebildet sein, um beispielsweise nach der Positionierung des Regalbediengerätes oder der Bestückungseinrichtung mit dem Handhabungs- und/oder der Übergabeeinrichtung vor der jeweiligen Lagerlinie und/oder dem Regalfach in die Lagerlinie und/oder das Regalfach hineinreichen, gegebenenfalls nach Ausführung einer Hubbewegung und Anheben der Ware dieses dann abzutransportieren oder aber in umgekehrte Richtung nach dem Hineinfahren und Absenken ablegen zu können.

Die Übergabeeinrichtung oder, wenn mehrere Übergabeeinrichtungen vorhanden sind, die Übergabeeinrichtungen sowie die Handhabungseinrichtung oder Handhabungseinrichtungen sind bevorzugt unabhängig voneinander betreibbar, sodass beispielsweise die Bestückung von Lagerlinien durch die Bestückungseinrichtung unabhängig von einen Austausch von Waren in den Regalfächern durch das Regalbediengerät erfolgen kann. Es besteht die Möglichkeit, dass mehrere Regalbediengeräte in einer Regalgasse angeordnet sind, um den Warentransport zwischen den Hochregalen sowie zwischen den Hochregalen und den Lagerlinien der Flächenregale und darüber hinaus zwischen den Flächenregalen effizienter gestalten zu können. Die Übergabeeinrichtung oder Übergabeeinrichtungen und die Handhabungseinrichtung oder Handhabungseinrichtungen können zueinander höhenverstellbar ausgebildet sein, um unabhängig voneinander das jeweilige System einsetzen zu können.

In dem Hochregallager können Fachauflagen beabstandet zueinander angeordnet sein, beispielsweise um darauf Waren abzulegen. Zwischen den Fachauflagen, von denen mehrere in einem Regalfach angeordnet sein können, können Übergabeeinrichtungen oder Handhabungseinrichtungen eingeführt werden, um unter die in den Regalfächern befindlichen Waren zu gelangen. Über eine Hubeinrichtung können dann die Übergabeeinrichtungen oder Handhabungseinrichtungen angehoben und damit auch die Waren oder Warenpakete von den Fachauflagen abgehoben und anschließend aus den Regalfächern abtransportiert werden.

In dem Flächenlager und/oder in dem Hochregallager kann zumindest ein angetriebenes, unabhängiges Transportgerät angeordnet sein, das entlang der Lagerlinien oder innerhalb eines Regalfaches Waren transportiert. Das Transportgerät ist in der Regel quer zu den Lagergängen oder der Längserstreckung der Regalgasse verfahrbar, damit Waren innerhalb der Lagerlinien oder der Regalfächer transportiert werden können. Das Transportgerät kann mit einer Hubeinrichtung versehen sein, um Waren anzuheben und abzusetzen zu können. Mehrere Transportgeräte können miteinander koppelbar ausgebildet sein, beispielsweise auch um mehrere Transportgeräte innerhalb eines Regalgerätes oder einer Lagerlinie synchron betätigen zu können oder aber um nebeneinander angeordnete Lagerlinien und/oder Regalfächer nutzen zu können. Hier können beispielsweise sehr große Waren auf zwei Lagerlinien oder mehreren Lagerlinien gelagert werden. Zum Transport der Waren können dann mehrere Transportgeräte in einer Lagerlinie oder mehrere Transportgeräte nebeneinander, also in unterschiedlichen Lagerlinien miteinander gekoppelt angetrieben werden. Die Lagerlinien müssen nicht alle in einer gemeinsamen ersten Ebene angeordnet sein, vielmehr ist es ausreichend, wenn die Lagerlinien auch in versetzten Ebenen oder auf einer geneigten Ebene angeordnet sind, wesentlich ist, dass alle Lagerlinien von dem Regalbediengerät und der Bestückungseinrichtung erreichbar sind.

Sowohl das Regalbediengerät als auch die Bestückungseinrichtung können mit einer Hubeinrichtung ausgestattet sein, um auf unterschiedlichen Höhenniveaus Waren aufnehmen und absetzen zu können.

Bei einem hohen Warendurchsatz werden die Waren oder Warenpakete auf eine der Lagerlinien des Flächenregals aufgesetzt. Wenn die Waren oder Warenpakete schnell für die Weiterverarbeitung oder für den Versand benötigt werden, können diese entweder von der Bestückungseinrichtung wieder aufgenommen oder aber über das Regalbediengerät auf eine gegenüberliegende Lagerlinie des jenseits der Regalgasse angeordneten Flächenregals transportiert und dort gesammelt werden. So kann beispielsweise von einer ersten Lagerlinie eines ersten Flächenlagers ein Warenpaket zur Regalgasse transportiert und über das Regalbediengerät aufgenommen und auf eine zweite Lagerlinie des zweiten Flächenlagers transportiert werden. Bei einer Ausgestaltung der Lagerlinie als Stetigförderer kann dann ein weiteres Warenpaket auf dieser Lagerlinie aufgesetzt und nach Zusammenstellung und Vervollständigung des Warenpaketes abtransportiert werden, entweder auf eine Bestückungseinrichtung jenseits der Regalgasse oder aber durch ein Rückfördern zum ersten Flächenlager und von dort aus auf die Bestückungseinrichtung zum Abtransport. Warenpakete, die einen längeren Zeitraum im Lagersystem verbleiben sollen, werden in eine oberhalb oder unterhalb der Ebene des Flächenlagers angeordnete Ebene des Hochregallagers eingelagert. Für diese Doppelfunktion ist das Regalbediengerät mit einer Hubfunktion sowie mit mehreren Transportelementen für die Bereitstellung der benötigten Funktionalitäten ausgerüstet.

Für die Einlagerung und Auslagerung der Waren in die Regalfächer des Hochregallagers sind bei Regalfächern mit einer einfachen Tiefe oder einer mehrfachen Tiefe sogenannte Teleskopgabeln zuständig, die an dem Regalbediengerät angeordnet sind. Das Regalbediengerät verfährt entlang der Regalgasse in die von einem Leitrechner vorgegebene richtige Höhe vor das vorgegebene Regalfach. Mit der Oberkante der Teleskopgabel leicht oberhalb der Lagerebene der zu lagernden Produkte werden die auf den Teleskopgabeln befindlichen Waren in das Regalfach eingefahren und über die Hubeinrichtung abgesenkt, bis die Waren in dem Regalfach abgelegt oder auf Fachauflagen aufliegen. Sobald die Oberkante oder die Auflagefläche der Teleskopgabeln leicht unterhalb der Lagerebene ist, fahren die Teleskopgabeln zurück, verkürzen also ihre effektive Länge in ihre Grundstellung und ziehen sich aus dem Regalfach zurück, beispielsweise in einen Hubraum des Regalbediengerätes. Die Fachauflagen können beispielsweise als Schienen oder Leisten ausgebildet sein, sodass die Zinken der Teleskopgabeln neben den Fachauflagen einfahren beziehungsweise ausfahren und zum Abheben oder Ablegen nach oben beziehungsweise nach unten verfahren werden. In Abhängigkeit von dem Volumen, dem Gewicht und anderen Eigenschaften der Waren oder Warenpakete können auch eine Mehrzahl von Teleskopgabeln und Fachauflagen verwendet werden.

Für die Aufnahme und Abgabe von Waren oder Warenpaketen von den Lagerlinien kann an dem Regalbediengerät ein Förderer angeordnet sein. Das Regalbediengerät fährt jeweils vor die von dem Leitrechner vorgegebenen Lagerlinie, nimmt mit dem Förderer die Ware oder das Warenpaket auf und gibt diese Ware an die gegenüberliegende Lagerlinie ab, wenn die Ware oder das Warenpaket nur durchgefördert wird, also von der ersten Lagerlinie durch das Regalbediengerät über die Regalgasse zur zweiten Lagerlinie auf der gegenüberliegenden Seite der Regalgasse. Soll eine andere als gegenüberliegende Lagerlinie verwendet werden, wird das Regalbediengerät entlang der Regalgasse verfahren und die Ware von dem Förderer, beispielsweise einem Kettenförderer, einem Bandförderer oder einem Rollenförderer auf eine andere Lagerlinie entlang der Regalgasse abgegeben.

Für die Übergabe der Waren oder Warenpakete von den Lagerlinien in die Regalfächer werden sowohl der Förderer als auch die Teleskopgabeln kombiniert eingesetzt. Der Förderer ist anhebbar ausgebildet, also an dem Regalbediengerät vertikal verfahrbar gelagert. Das Regalbediengerät verfährt vor eine Lagerlinie und nimmt die Ware oder das Warenpaket mit dem Förderer, gegebenenfalls dem angehobenen Förderer, auf und verfährt sie auf die Hubeinrichtung des Regalbediengerätes. Von dem Förderer wird die Ware auf die Teleskopgabel aufgelegt, indem sich der Förderer an dem Regalbediengerät absenkt oder aber die Teleskopgabel angehoben wird. Das Regalbediengerät verfährt dann entlang der Regalgasse in die gewünschte Höhe vor das von dem Leitrechner vorgegebene Regalfach und lagert mit Hilfe der Teleskopgabel die Ware in das jeweilige Regalfach ein. Das Rauslagern aus dem Regalfach und abgeben an eine Lagerlinie in dem Flächenregal erfolgt in umgekehrter Reinfolge.

An dem Regalbediengerät können somit die teleskopierbare Gabel sowie der Förderer höhenverlagerbar, insbesondere auch relativ zueinander höhenverlagerbar gelagert sein. Der anhebbare Förderer sowie die Schienen oder Zinken der Teleskopgabel können auf dem Regalbediengerät versetzt zueinander angeordnet sein, der Förderer kann aus einer Vielzahl von schmalen Förderelementen wie Bändern, Ketten oder Rollen ausgeführt sein, die jeweils in einem Rahmen geführt sind. So kann der Rahmen relativ zu dem Zinken der Teleskopgabeln in der Höhe verlagert werden.

Die Waren können auf Paletten in unterschiedlichen Formen und Größen transportiert und gelagert werden. Alternativ können die Waren ohne Palette oder Transportunterlage transportiert und gelagert werden. Bei einer Lagerung ohne Paletten oder Transportunterlagen bestehen die Waren oder Warenpakete vornehmlich aus übereinander gestapelten, ebenen Bögen oder Platten aus Karton, Wellpappe, Holz, Kunststoff oder anderen Werkstoffen, beispielsweise Metall.

Nachfolgend wir ein Ausführungsbeispiel der Erfindung anhand der Figuren näher erläutert. Es zeigen:
- Figur 1-: eine Ansicht des Lagersystems in Querschnittsansicht;
- Figur 2-: eine Ansicht eines Lagersystems in Draufsicht;
- Figur 3-: eine Detaildarstellung eines Regalbediengerätes mit Förderer und Gabelteleskop; sowie
- Figur 4-: eine Detailansicht des Lagersystems mit Regalbediengerät und Hochregallager mit Übergabeeinrichtung zur doppelttiefen Einlagerung.

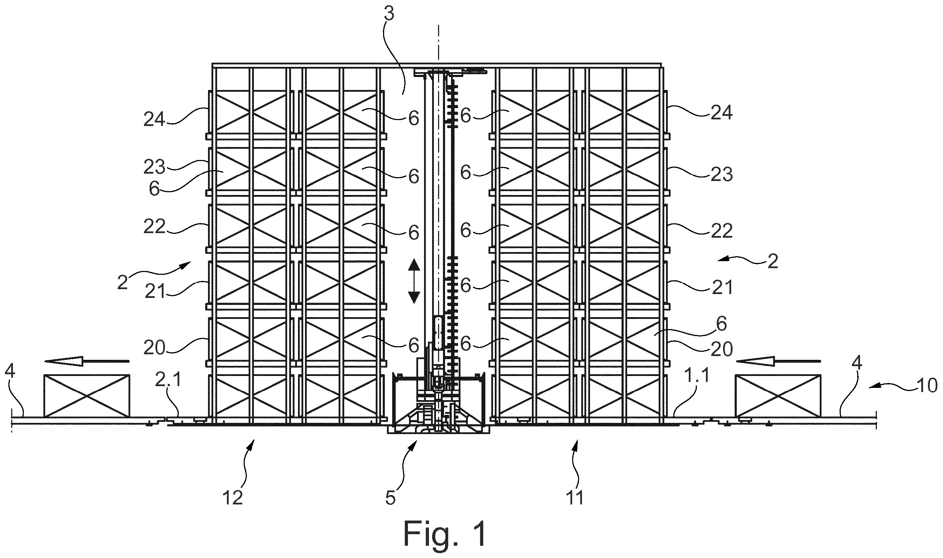

In der Figur 1 ist das Lagersystem in einer Querschnittsdarstellung senkrecht zu der Verfahrrichtung eines Regalbediengerätes 5 entlang einer Regalgasse dargestellt. Das Lagersystem in dem dargestellten Ausführungsbeispiel weist ein Flächenlager 1 in einer ersten Ebene 10 auf, das mehrere Lagerlinien 1.1, 2.1 aufweist, die beidseitig neben der Regalgasse 3 und hintereinander senkrecht zu der Längserstreckung der Regalgasse 3 in der ersten Ebene angeordnet sind. Die hintereinander angeordneten Lagerlinien bilden jeweils Lagerliniengänge aus, die durch die quer zur Längserstreckung der Lagerlinien 1.1, 2.2 hintereinander angeordneten weiteren Lagerlinien ausgebildet werden. Die beiden Lagerliniengänge des bevorzugt ebenerdigen Flächenlagers liegen einander gegenüber und verlaufen im Wesentlichen parallel zueinander und sind durch die Regalgasse 3 voneinander getrennt. Innerhalb der Lagergasse 3 ist ein Regalbediengerät 5 verfahrbar angeordnet. Das Regalbediengerät 5 kann entlang der Regalgasse 3 in der ersten Ebene 10 entlang der Stirnseiten der Lagerlinien entlangfahren und von dort Waren, die beispielsweise auf Paletten abgelegt sind, aufnehmen und an eine andere Lagerlinie wieder abgeben. Der Transport der aufgenommenen Ware oder Waren können über die Regalgasse 3 hinweg zu einer Lagerlinie auf dem gegenüberliegenden Lagerliniengang erfolgen. Ebenso ist es möglich, dass die auf dem Regalbediengerät 5 aufgenommenen Waren entlang der Regalgasse 3 zu einer anderen Lagerlinie des gleichen Lagerlinienganges transportiert und dort abgelegt werden.

Die Waren können auf die Lagerlinien des Flächenlagers über eine Bestückungseinrichtung 4 transportiert werden. Die Bestückungseinrichtung 4 in dem dargestellten Ausführungsbeispiel ist als Linearförderer oder Stetigförderer ausgebildet, der parallel zur Regalgasse 3 an den der Regalgasse 3 abgewandten Enden der Lagerlinien angeordnet ist. Die Bestückungseinrichtung kann auch als Gabelstapler oder ein anderes Fluorförderfahrzeug ausgebildet sein oder als eine andere Handhabungseinrichtung, mit der die Waren auf die jeweiligen Lagerlinien aufgesetzt oder aufgelegt werden.

Die Lagerlinien selbst sind bevorzugt als Stetigförderer, insbesondere als Rollenförderer, Kettenförderer oder Bandförderer ausgebildet und können entweder einen eigenständigen Antrieb aufweisen oder aber über eine Kraftübertragungsstelle oder Schnittstelle mit dem Regalbediengerät 5 und/oder der Bestückungseinrichtung 4 angetrieben werden. Von der Bestückungseinrichtung 4 werden dann die Waren auf die erste Lagerlinie 1.1 des Flächenlagers aufgelegt, von dem der Regalgasse 3 abgewandten Ende der Lagerlinie 1.1 zum Regalbediengerät 5 transportiert, von diesem aufgenommen und auf eine Lagerlinie 2.1, die der ersten Lagerlinie 1.1 gegenüberliegt, durchgeleitet, um dann von einer weiteren Bestückungseinrichtung 4 aufgenommen und abtransportiert zu werden oder aber von dem Regalbediengerät 5 auf eine andere Lagerlinie einer der beiden Lagerliniengängen 11, 12 oder in ein Regalfach eines Hochregallagers 2 transportiert zu werden, die sich in dem dargestellten Ausführungsbeispiel oberhalb der ersten Ebene 10 befinden.

In dem dargestellten Ausführungsbeispiel sind zwei Hochregallager 2 vertikal beabstandet zu der ersten Ebene 10, in der das Flächenlager 1 angeordnet ist, angeordnet. Neben dem dargestellten Ausführungsbeispiel mit vertikal oberhalb der Lagerlinien angeordneten Regalfächer 6 der Hochregallager 2 besteht die Möglichkeit, ergänzend oder alternativ unterhalb der ersten Ebene 10, also vertikal in Gravitationsrichtung, Regalfächer 6 eines Hochregallagers 2 mit mehreren Ebenen an Regalfächern 6 vorzusehen. In dem dargestellten Ausführungsbeispiel sind insgesamt fünf Hochregalebenen 20, 21, 22, 23, 24 vorgesehen, mit jeweils zwei Regalfächern 6 in Längserstreckung der Lagerlinien, also quer zur Längserstreckung der Regalgasse 3. Das Regalbediengerät 5 ist über die gesamte Höhe des Hochregallagers 2 verfahrbar, was durch den Doppelpfeil angedeutet ist. Die Einlagerung in Regalfächern 6 oberhalb der ersten Ebene 10 am Flächenlager 1 erfolgt bevorzugt dann, wenn eine bestimmte Ware für einen längeren Zeitraum in dem Lagersystem bleiben soll. Nachdem das Regalbediengerät 5 die Ware von dem Stetigförderer der Lagerlinie 1.1 aufgenommen hat, kann es sowohl in der Höhe als auch entlang der Regalgasse an den Lagerlinien vorbeifahren, um die gewünschte Position sowohl in der richtigen Hochregalebene als auch entlang der Regalgasse 3 oberhalb der jeweiligen Lagerlinie.

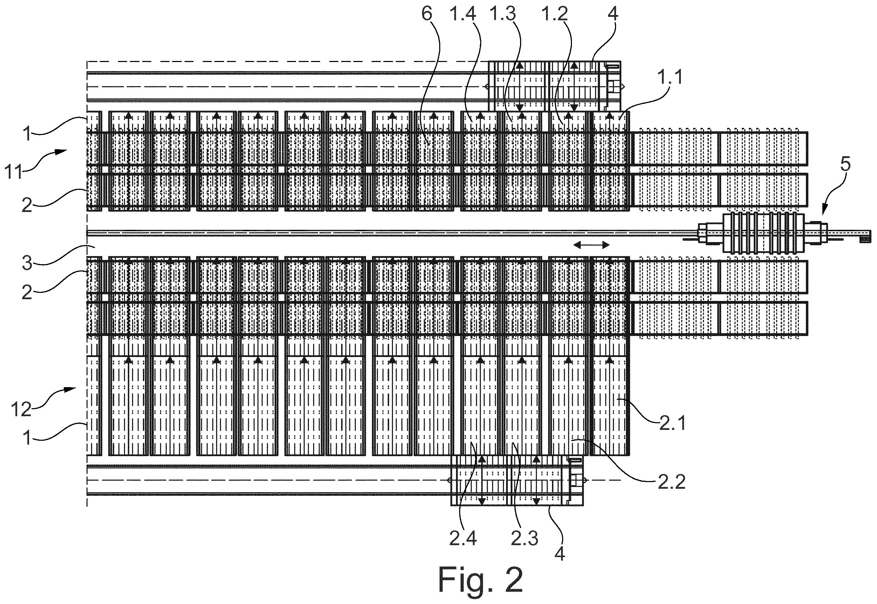

Figur 2 zeigt die Anordnung des Lagersystems in Draufsicht. Die Regalgasse 3 erstreckt sich zwischen den beiden Lagerliniengängen 11, 12, die im Wesentlichen parallel zueinander orientiert ausgerichtet sind. Die Lagerliniengänge 11,12 bestehen aus einer Vielzahl beidseitig der Regalgasse 3 angeordneten, senkrecht davon abgehenden Lagerlinien 1.1... 1.n, 2.1......2.n. Das Regalbediengerät 5 ist entlang einer Schiene verfahrbar und wird motorisch angetrieben. An dem Regalbediengerät 5 ist eine Hubeinrichtung angeordnet, über die ein sogenannter Hubrahmen 55, auf dem die Waren von den Lagerlinien aufgeladen werden, angehoben werden kann. In dem dargestellten Ausführungsbeispiel ist die Länge der Lagerlinien des ersten Lagerlinienganges 11 doppelt so groß wie die Länge der Lagerlinien des zweiten Lagerlinienganges 12. Grundsätzlich ist es auch möglich, gleichlange Lagerlinien in den Lagerliniengängen 11, 12 vorzusehen. Je länger die Lagerlinien ausgebildet sind, desto mehr Waren können auf ihnen gelagert werden. Die Lagerlinien sind bevorzugt als Stetigförderer, insbesondere Rollenförderer, Kettenförderer oder Bandförderer ausgebildet und sind in der Lage, Waren oder Warenpakete aufzunehmen, zu tragen und zu transportieren. In dem darstellten Ausführungsbeispiel befinden sich an den der Regalgasse 3 abgewandten Stirnseiten der Lagerlinien Bestückungseinrichtungen 4, die auch als automatische Transferwagen ausgebildet sein können. Die Bestückungseinrichtungen 4 können schienengebunden sein und entlang der Längserstreckung der Lagerliniengänge 11, 12 verfahren. Von den Bestückungseinrichtungen 4, die mit Längsförderern ausgestattet sein können, beispielsweise angetriebenen Rollen, Ketten oder Bändern, können Waren von den Lagerlinien aufgenommen oder auf sie abgelegt werden.

Die Hochregallager 2 oberhalb der Lagerliniengänge 11, 12 der beiden Flächenlager 1 sind in Regalfächer 6 unterteilt, die so breit sind wie ein, zwei oder mehr Lagerlinien, jedoch eine geringere Tiefe aufweisen. Die Breite der Regalfächer 6 wird durch den Abstand von Vertikalstreben des Hochregallagers 2 definiert. In Figur 2 sind die Regalfächer 6 so breit wie zwei Lagerlinien dargestellt.

Neben der dargestellten, abgesehen von der Lagerlinienlänge im Wesentlichen symmetrischen Anordnung von Hochregallagern 2 und Flächenlagern 1 beiderseits der Regalgasse 3 besteht die Möglichkeit, auch nur ein Hochregallager 2 oberhalb eines Lagerlinienganges 11, 12 anzuordnen, sollte eine geringere Lagerkapazität notwendig sein oder aus anderen Gründen ein zweites Hochregallager 2 nicht benötigt werden. Ebenfalls ist es möglich, dass Hochregallager 2 nicht über die gesamte Länge der Lagerliniengänge 11, 12 anzuordnen, sondern nur über einen Teil der Lagerlinien oder auch gegebenenfalls unterhalb der Lagerlinien.

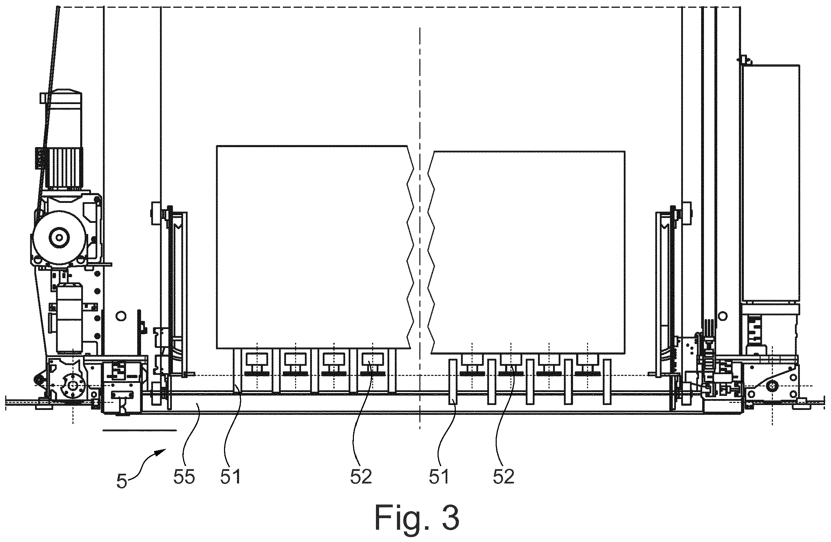

In der Figur 3 ist das Regalbediengerät 5 in einer Detailansicht dargestellt. Der Hubrahmen 55 ist motorisch in vertikaler Richtung verfahrbar an dem Regalbediengerät 5 gelagert. Das Regalbediengerät 5 kann, wie in der Figur 2 gezeigt, entlang der Regalgasse 3 verfahren werden. Auf dem Hubrahmen 55 des Regalbediengerätes 5 sind zwei unabhängig betreibbare Systeme zur Handhabung und zum Transportieren von Waren installiert. Einmal eine Handhabungseinrichtung 51 in Gestalt eines Längsförderers und einmal eine Übergabeeinrichtung 52 in Gestalt von teleskopierbaren Gabeln oder Trägern, wobei die die Längsförderer 51 und die Teleskopgabeln 52 in ihrer Höhe relativ zueinander verlagerbar sind. In der linken Darstellung der Figur 3 sind die Längsförderer 51 angehoben, in der rechten Darstellung sind sie abgesenkt, so dass die jeweils darauf angeordneten Waren einmal von den Längsförderern 51 und einmal von den teleskopierbaren Handhabungseinrichtungen 52 aufgenommen und dort getragen sind. Sowohl die Anzahl der Längsförderer 51 als auch die Anzahl der teleskopierbaren Gabeln oder Teleskopträger 52 können variieren. Die einzelnen Handhabungseinrichtungen oder Übergabeeinrichtungen können zu Gruppen zusammengefasst und gruppenweise oder einzeln über eine zentrale Steuerung angesteuert werden.

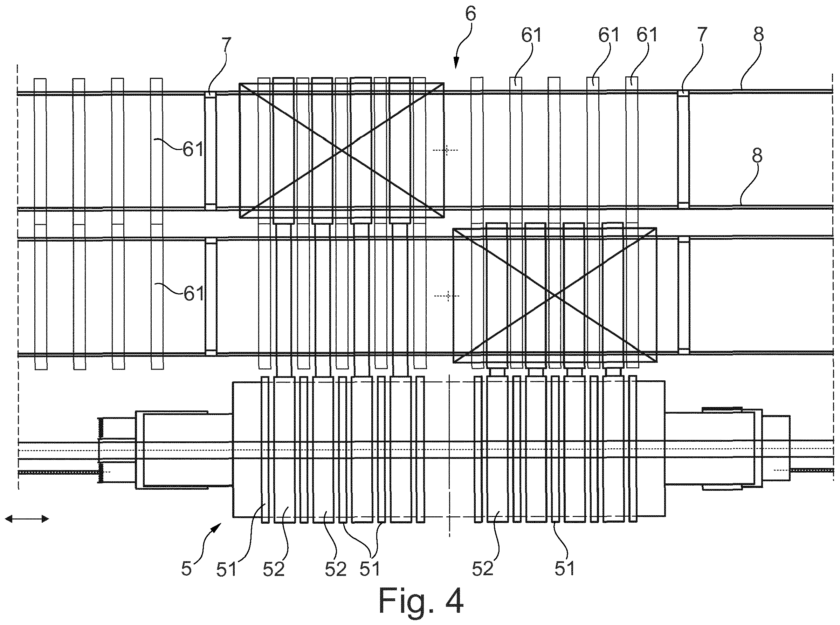

Anhand der Figur 4 wird die Einlagerung und Auslagerung von Waren in Regalfächer 6 erläutert. Auf dem Regalbediengerät 5 sind zwei unabhängig voneinander betreibbare Systeme aus Handhabungs- und Übergabeeinrichtungen 51, 52 angeordnet, das linke System zeigt die Übergabeeinrichtungen 52 mit den teleskopierbaren Trägern in einer maximal ausgefahrenen Stellung, um ein Warenpaket in ein Regalfach 6 auf Fachauflagen 61 ablegt. Die Fachauflage 61 sind beispielsweise als Leisten oder Träger ausgebildet, die beabstandet zueinander in Längserstreckung der Lagerlinien oberhalb in den Ebenen der Fächer 6 des Hochregallagers 2 angeordnet sind. Zwischen diesen Fachauflagen 61 kann die teleskopierbare Übergabeeinrichtung 52 ausfahren und das jeweilige Warenpaket untergreifen. Über den Hubrahmen 55 an dem Regalbediengerät 5 wird dann das Warenpaket zusammen mit der Übergabeeinrichtung 52 angehoben. Die Teleskopgabeln werden verkürzt und die Waren auf den Hubrahmen 55 zurückgefördert. In der rechten Darstellung der Figur 4 wird das Warenpaket über die Übergabeeinrichtung 52 nur bis zu einer ersten Regaltiefe verfahren, die unmittelbar an die Regalgasse 3 angrenzt.

Die Warenpakete werden über die Längsförderer der Handhabungseinrichtung 51 von und auf die jeweiligen Lagerlinien verschoben.

In der Figur 4 ist auch der Aufbau des Hochregallagers zu erkennen, Vertikalpfeiler 7 sind die Regalstützen, zwischen denen sich Querträger 8 erstrecken, auf denen die Fachauflagen angeordnet sind. Die Regalbreite des Regalfaches 6 wird durch den Abstand der Vertikalträger 7 definiert. Die Fachtiefe wird durch den Abstand der Querträger 8 zueinander festgelegt, im dargestellten Ausführungsbeispiel weist das Hochregallager eine doppelte Fachtiefe auf.

Die Übergabeeinrichtungen 5 mit den teleskopierbaren Gabeln haben eine Grundlänge, die etwas kürzer als die lichte Breite der Regalgasse 3 ist. Die maximale Länge eines Warenpaketes entspricht der Grundlänge der teleskopierbaren Übergabeeinrichtung 52. Bei einer einfach teleskopierbaren Ausgestaltung entspricht die maximale Ausfahrlänge der Grundlänge, damit kann jeweils ein maximales Warenpaket rechts und links der Fahrrichtung entlang der Regalgasse 3 des Regalbediengerätes 5 eingelagert werden. Hier spricht man von einer einfachtiefen Lagerung. Grundsätzlich ist es auch möglich, längere Übergabeeinrichtungen 52 mit einer mehrfachen Teleskopierbarkeit einzusetzen, so dass sich ein vergrößerter, beispielsweise doppelter Ausfahrweg der Grundlänge ergibt, so dass zwei maximal breite Warenpakete rechts und links der Regalgasse 3 eingelagert werden können. Hier spricht man von einer doppelttiefen Lagerung.

Sofern eine noch tiefere Lagerung, also eine mehrfachtiefe Lagerung stattfinden soll, kann innerhalb der Hochregalfächer ein angetriebenes, unabhängiges Transportgerät angeordnet sein, auf das die Regalbediengeräte oder die Übergabeeinrichtung 51 oder die Handhabungseinrichtung 52 das Warenpaket aufsetzt und von dem aus es dann entlang der Längserstreckung der Fachauflagen 61 in das jeweilige Regalfach 6 hineintransportiert wird. Ein solches angetriebenes, unabhängiges Transportgerät wird auch Satellit genannt. Diese Satelliten sind mit Längsförderern, beispielsweise angetriebenen Bändern, Ketten oder Rollen ausgerüstet und können von den Lagerlinien oder auch aus den Regalfächern Warenpakete aufnehmen und mehrfachtief in ein Regalfach 6 einfahren bzw. ein Warenpaket aus einem mehrfach tiefen Regalfach aufnehmen und an eine der Stirnseiten der Regalfächer transportieren. Dazu sind an dem Transportgerät Hubeinrichtungen angeordnet, über die die Waren von den Fachauflagen angehoben und abtransportiert werden können. Die Hubeinrichtungen können als Stempel oder Hubleisten ausgebildet sein, alternativ kann das gesamte Transportgerät anheben oder absenken lassen, um unter die Ware zu gelangen, sie anzuheben und dann zu transportieren.

Ein Auslagern eines Warenpaketes aus einem Hochregallagerfach 6 erfolgt in umgekehrter Reihenfolge über die teleskopierbare Übergabeeinrichtung 52 oder über die Handhabungseinrichtung 51.

## Patentansprüche

1. Lagersystem zur Lagerung und Bereitstellung von Waren mit einem Flächenlager (1), mit
- mehreren ersten Lagerlinien (1.1, 1.2, 1.3, ..., 1.n), die eine Längserstreckung aufweisen und in einer ersten Ebene (10) quer zu der Lagerlinienlängserstreckung hintereinander angeordnet sind und einen ersten Lagerliniengang (11) bilden,
- mehreren zweiten Lagerlinien (2.1, 2.2, 2.3, ...; 2.n), die eine Längserstreckung aufweisen und in der ersten Ebene (10) quer zu der Lagerlinienlängserstreckung hintereinander angeordnet sind und einen zweiten Lagerliniengang (12) bilden,
- die beiden Lagerliniengänge (11, 12) sind beiderseits einer Regalgasse (3) angeordnet,
- mit einer Bestückungseinrichtung (4) zum Beladen der ersten Lagerlinien (1.1, 1.2, 1.3, ..., 1.n) mit Waren und einer Bestückungseinrichtung (4) zum Entladen von Waren von den zweiten Lagerlinien ( 2.1, 2.2, 2.3, ...; 2.n )
- die Bestückungseinrichtung (4) ist entlang der Lagerliniengänge (11, 12) verfahrbar,
- die Lagerlinien (1.1, 1.2, 1.3, ..., 1.n; 2.1, 2.2, 2.3, ...; 2.n) der Lagerliniengänge (11, 12) münden in der Regalgasse (3) und sind an den der Regalgasse (3) abgewandten Abschnitten mit der Bestückungseinrichtung (4) koppelbar ,
und
zumindest zwei Hochregallager (2),
- wobei die Hochregallager (2) jeweils mit zumindest einer zweiten Hochregalebene (20, 21, 22, ..., 2n) vertikal zu der ersten Ebene (10) beabstandet neben der Regalgasse (3) angeordnet sind,
- zumindest ein Regalbediengerät (5) ist in der Regalgasse (3) und entlang der Regalgasse (3) verfahrbar angeordnet,
- das Regalbediengerät (5) ist ausgebildet, Waren zwischen den Lagerliniengängen (11, 12) und zwischen dem Flächenlager (1) und dem Hochregallager (2) zu transportieren, **dadurch gekennzeichnet, dass**
- die Lagerlinien (1.1, 1.2, 1.3, ..., 1.n; 2.1, 2.2, 2.3, ...; 2.n) in der ersten Ebene (10) als Stetigförderer ausgebildet sind, dass die Lagerlinien (1.1, 1.2, 1.3, ..., 1.n; 2.1, 2.2, 2.3, ...; 2.n) zur Aufnahme von Waren ausgebildet sind, dass die Hochregallager (2) oberhalb der Lagerliniengänge (11, 12) der beiden Flächenlager (1) in Regalfächer (6) unterteilt sind, die so breit sind wie ein, zwei oder mehr Lagerlinien (1.1, 1.2, 1.3, ..., 1.n; 2.1, 2.2, 2.3, ...; 2.n), jedoch eine geringere Tiefe aufweisen, wobei die Breite der Regalfächer (6) durch den Abstand von Vertikalstreben des Hochregallagers (2) definiert wird, dass die ersten Lagerlinien (1.1, 1.2, 1.3, ..., 1.n) die Waren zu dem Regalbediengerät (5) transportieren und dass die zweiten Lagerlinien (2.1, 2.2, 2.3, ...; 2.n) die Waren von dem Regalbediengerät (5) weg zu der Bestückungseinrichtung (4) zum Entladen der Waren transportieren.

2. Lagersystem nach Anspruch 1, **dadurch gekennzeichnet, dass** das Hochregallager (2) mehrere Hochregalebenen (20, 21, 22, ..., 2n) übereinander aufweist.

3. Lagersystem nach Anspruch 1 oder 2, **dadurch gekennzeichnet, dass** in dem Hochregallager (2) mehrere Regalfächer (6) in Lagerlinienlängserstreckung und/oder entlang der Regalgasse (3) hintereinander in einer Hochregalebene (20, 21, 22, ..., 2n) angeordnet sind.

4. Lagersystem nach einem der voranstehenden Ansprüche, **dadurch gekennzeichnet, dass** beiderseits der Regalgasse (3) ein Hochregallager (2) vertikal beabstandet zu dem Flächenlager (1) angeordnet ist.

5. Lagersystem nach Anspruch 1, **dadurch gekennzeichnet, dass** die Stetigförderer als Rollenförderer, Kettenförderer oder Bandförderer ausgebildet sind.

6. Lagersystem nach einem der voranstehenden Ansprüche, **dadurch gekennzeichnet, dass** die Bestückungseinrichtung (4) und/oder das Regalbediengerät (5) mit zumindest einer Handhabungseinrichtung (51) und/oder zumindest einer Übergabeeinrichtung (52) ausgestattet ist.

7. Lagersystem nach Anspruch 6, **dadurch gekennzeichnet, dass** die Handhabungs- oder Übergabeeinrichtung (52) telekopierbar ausgebildet ist.

8. Lagersystem nach Anspruch 6 oder 7, **dadurch gekennzeichnet, dass** die Handhabungs- und/oder Übergabeeinrichtung zumindest einen Längsförderer (51) aufweist.

9. Lagersystem nach einem der Ansprüche 6 bis 8, **dadurch gekennzeichnet, dass** die Übergabeeinrichtung oder Übergabeeinrichtungen (51, 52) und Handhabungseinrichtung oder Handhabungseinrichtungen (51, 52) unabhängig voneinander betreibbar sind.

10. Lagersystem nach einem der Ansprüche 6 bis 9, **dadurch gekennzeichnet, dass** die Übergabeeinrichtung oder Übergabeeinrichtungen (51, 52) und Handhabungseinrichtung oder Handhabungseinrichtungen (51, 52) zueinander höhenverstellbar sind.

11. Lagersystem nach einem der voranstehenden Ansprüche, **dadurch gekennzeichnet, dass** in dem Hochregallager (2) Fachauflagen (61) beabstandet zueinander angeordnet sind.

12. Lagersystem nach einem der voranstehenden Ansprüche, **dadurch gekennzeichnet, dass** in dem Flächenlager (1) und/oder in dem Hochregallager (2) zumindest ein angetriebenes, unabhängiges Transportgerät angeordnet ist.

13. Lagersystem nach Anspruch 12, **dadurch gekennzeichnet, dass** mehrere Transportgeräte miteinander koppelbar sind.

14. Lagersystem nach einem der voranstehenden Ansprüche, **dadurch gekennzeichnet, dass** nicht alle Lagerlinien (1.1, 1.2, 1.3, ..., 1. n; 2.1, 2.2, 2.3, ... ; 2.n) eines Lagerlinienganges (11, 12) in einer gemeinsamen ersten Ebene (10) angeordnet sind.

## Claims

1. A storage system for storing and providing goods with
an area storage (1), with
- a plurality of first storage lines (1.1, 1.2, 1.3, ..., 1.n), which have a longitudinal extent and are arranged one behind the other in a first level (10) transverse to the longitudinal extent of the storage lines and form a first storage line aisle (11),
- a plurality of second storage lines (2.1, 2.2, 2.3, ..., 2.n), which have a longitudinal extent and are arranged one behind the other in the first level (10) transversely to the longitudinal extent of the storage lines and form a second storage line aisle (12),
- the two storage line aisles (11, 12) are arranged on both sides of a shelf aisle (3),
- with a loading device (4) for loading the first storage lines (1.1, 1.2, 1.3, ..., 1.n) with goods and a loading device (4) for unloading goods from the second storage lines (2.1, 2.2, 2.3, ..., 2.n)
- the loading device (4) is moveable along the storage line aisles (11, 12),
- the storage lines (1.1, 1.2, 1.3, ..., 1.n; 2.1, 2.2, 2.3, ..., 2.n) of the storage line aisles (11, 12) open into the shelf aisle (3) and can be coupled to the loading device (4) at the section facing away from the shelf aisle (3),
at least two high-bay storages (2),
- wherein the high-bay storages (2) are each arranged with at least one second high-bay level (20, 21, 22, ..., 2n) vertically spaced apart from the first level (10) next to the shelf aisle (3),
- at least one stacker crane (5) is arranged in the shelf aisle (3) and moveable along the shelf aisle (3),
- the stacker crane (5) is configured to transport goods between the storage line aisles (11, 12) and between the area storage (1) and the high-bay storage (2), **characterized in that**
- the storage lines (1.1, 1.2, 1.3, ..., 1.n; 2.1, 2.2, 2.3, ..., 2.n) in the first level (10) are configured as continuous conveyors, that the storage lines (1.1, 1.2, 1.3, ..., 1.n; 2.1, 2.2, 2.3, ..., 2.n) are configured to receive goods, that the high-bay storages (2) above the storage line aisles (11, 12) of the two area storages (1) are divided into shelf compartments (6) which are as wide as one, two or more storage lines (1.1, 1.2, 1.3, ..., 1.n; 2.1, 2.2, 2.3, ..., 2.n), but have a smaller depth, wherein the width of the shelf compartments (6) is defined by the distance of vertical struts of the high-bay storage (2), that the first storage lines (1.1, 1.2, 1.3, ..., 1.n) transport the goods to the stacker crane (5) and that the second storage lines (2.1, 2.2, 2.3, ..., 2.n) transport the goods away from the stacker crane (5) to the loading device (4) for unloading the goods.

2. The storage system according to claim 1, **characterized in that** the high-bay storage (2) has several high-bay levels (20, 21, 22, ..., 2n) one above the other.

3. The storage system according to claim 1 or 2, **characterized in that** in the high-bay storage (2) a plurality of shelf compartments (6) are arranged one behind the other in a high-bay level (20, 21, 22, ..., 2n) in the longitudinal extent of the storage lines and/or along the shelf aisle (3).

4. The storage system according to one of the preceding claims, **characterized in that** a high-bay storage (2) is arranged on both sides of the shelf aisle (3) at a vertical distance from the area storage (1).

5. The storage system according to claim 1, **characterized in that** the continuous conveyors are configured as roller conveyors, chain conveyors or belt conveyors.

6. The storage system according to one of the preceding claims, **characterized in that** the loading device (4) and/or the stacker crane (5) is equipped with at least one handling device (51) and/or at least one transfer device (52).

7. The storage system according to claim 6, **characterized in that** the handling and/or transfer device (52) is configured to be telescopic.

8. The storage system according to claim 6 or 7, **characterized in that** the handling and/or transfer device comprises at least one longitudinal conveyor (51).

9. The storage system according to one of claims 6 to 8, **characterized in that** the transfer device or transfer devices (51, 52) and handling device or handling devices (51, 52) can be operated independently of one another.

10. The storage system according to any one of claims 6 to 9, **characterized in that** the transfer device or transfer devices (51, 52) and handling device or handling devices (51, 52) are height-adjustable relative to one another.

11. The storage system according to one of the preceding claims, **characterized in that** shelf supports (61) are arranged at a distance from one another in the high-bay storage (2).

12. The storage system according to one of the preceding claims, **characterized in that** at least one driven, independent transport device is arranged is arranged in the area storage (1) and/or in the high-bay storage (2).

13. The storage system according to claim 12, **characterized in that** a plurality of transport devices can be coupled to one another.

14. The storage system according to one of the preceding claims, **characterized in that** not all storage lines (1.1, 1.2, 1.3, ..., 1.n; 2.1, 2.2, 2.3, ..., 2.n) of a storage line aisle (11, 12) are arranged in a common first level (10).

## Revendications

1. Système de stockage pour stocker et mettre à disposition des marchandises, comportant
un entrepôt de surface (1) comprenant
- plusieurs premières lignes de stockage (1.1, 1.2, 1.3, ..., 1.n), qui présentent une extension longitudinale et sont disposées les unes derrière les autres dans un premier plan (10) transversalement à l'extension longitudinale des lignes de stockage et forment un premier couloir de lignes de stockage (11),
- plusieurs deuxièmes lignes de stockage (2.1, 2.2, 2.3, ... ; 2.n) qui présentent une extension longitudinale et sont disposées les unes derrière les autres dans le premier plan (10) transversalement à l'extension longitudinale des lignes de stockage et forment un deuxième couloir de lignes de stockage (12),
- les deux couloirs de lignes de stockage (11, 12) étant disposées de part et d'autre d'une allée de rayonnages (3),
- un dispositif de placement (4) pour charger les premières lignes de stockage (1.2, 1.2, 1.3, ..., 1.n) avec des marchandises, et un dispositif de placement (4) pour décharger des marchandises depuis les deuxièmes lignes de stockage (2.1, 2.2, 2.3, ... ; 2.n),
- le dispositif de placement (4) étant déplaçable le long des couloirs de lignes de stockage (11, 12),
- les lignes de stockage (1.1, 1.2, 1.3, ..., 1.n ; 2.1, 2.2, 2.3, ... ; 2.n) des couloirs de lignes de stockage (11, 12) débouchent dans l'allée de rayonnages (3) et peuvent être couplées au dispositif de placement (4), au niveau des sections opposées à l'allée de rayonnages (3),
et
au moins deux entrepôts à rayonnages en hauteur (2),
- les entrepôts à rayonnages en hauteur (2) étant disposés chacun à côté de l'allée de rayonnages (3), avec au moins un deuxième plan de rayonnages en hauteur (20, 21, 22, ..., 2n) espacé verticalement du premier plan (10),
- au moins un transstockeur (5) étant disposé dans l'allée de rayonnages (3) de manière à pouvoir se déplacer le long de l'allée de rayonnages (3),
- le transstockeur (5) étant réalisé pour transporter des marchandises entre les couloirs de lignes de stockage (11, 12) et entre l'entrepôt de surface (1) et l'entrepôt à rayonnages en hauteur (2),
**caractérisé en ce que**
- les lignes de stockage (1.1, 1.2, 1.3, ..., 1.n ; 2.1, 2.2, 2.3, ... ; 2.n) dans le premier plan (10) sont conçues comme des convoyeurs en continu, **en ce que** les lignes de stockage (1.1, 1.2, 1.3, ..., 1.n ; 2.1, 2.2, 2.3, ... ; 2.n) sont réalisées pour recevoir des marchandises, **en ce que** les entrepôts à rayonnages en hauteur (2) au-dessus des couloirs de lignes de stockage (11, 12) des deux entrepôts de surface (1) sont subdivisés en compartiments de rayonnage (6) qui ont la même largeur qu'une, deux ou plusieurs lignes de stockage (1.1, 1.2, 1.3, ..., 1.n ; 2.1, 2.2, 2.3, ... ; 2.n), mais qui présente une profondeur réduite, la largeur des compartiments de rayonnage (6) étant définie par la distance des entretoises verticales de l'entrepôt à rayonnages en hauteur (2), **en ce que** les premières lignes de stockage (1.1, 1.2, 1.3, ..., 1.n) servent à transporter les marchandises vers le transstockeur (5), et **en ce que** les deuxièmes lignes de stockage (2.1, 2.2, 2.3, ... ; 2.n) servent à transporter les marchandises en éloignement du transstockeur (5) vers le dispositif de placement (4) pour décharger les marchandises.

2. Système de stockage selon la revendication 1,
**caractérisé en ce que** l'entrepôt à rayonnages en hauteur (2) présente plusieurs plans de rayonnages en hauteur (20, 21, 22, ..., 2n) superposés.

3. Système de stockage selon la revendication 1 ou 2,
**caractérisé en ce que** dans l'entrepôt à rayonnages en hauteur (2), plusieurs compartiments de rayonnage (6) sont disposés les uns derrière les autres, dans l'extension longitudinale de la ligne de stockage et/ou le long de l'allée de rayonnages (3), dans un plan de rayonnage en hauteur (20, 21, 22, ..., 2n).

4. Système de stockage selon l'une des revendications précédentes, **caractérisé en ce que**, de part et d'autre de l'allée de rayonnages (3), un entrepôt à rayonnages en hauteur (2) est disposé verticalement à distance de l'entrepôt de surface (1).

5. Système de stockage selon la revendication 1,
**caractérisé en ce que** les convoyeurs en continu sont des convoyeurs à rouleaux, des convoyeurs à chaînes ou des convoyeurs à bandes.

6. Système de stockage selon l'une des revendications précédentes, **caractérisé en ce que** le dispositif de placement (4) et/ou le transstockeur (5) est équipé d'au moins un dispositif de manipulation (51) et/ou d'au moins un dispositif de transfert (52).

7. Système de stockage selon la revendication 6,
**caractérisé en ce que** le dispositif de manipulation ou de transfert (52) est conçu pour être télescopique.

8. Système de stockage selon la revendication 6 ou 7,
**caractérisé en ce que** le dispositif de manipulation et/ou de transfert comporte au moins un convoyeur longitudinal (51).

9. Système de stockage selon l'une des revendications 6 à 8,
**caractérisé en ce que** le dispositif de transfert ou les dispositifs de transfert (51, 52) et le dispositif de manipulation ou les dispositifs de manipulation (51, 52) peuvent fonctionner indépendamment les uns des autres.

10. Système de stockage selon l'une des revendications 6 à 9,
**caractérisé en ce que** le dispositif de transfert ou les dispositifs de transfert (51, 52) et le dispositif de manipulation ou les dispositifs de manipulation (51, 52) sont réglables en hauteur les uns par rapport aux autres.

11. Système de stockage selon l'une des revendications précédentes, **caractérisé en ce que** des supports de casier (61) sont disposés à distance les uns des autres dans l'entrepôt à rayonnages en hauteur (2).

12. Système de stockage selon l'une des revendications précédentes, **caractérisé en ce qu'**au moins un appareil de transport entraîné indépendant est disposé dans l'entrepôt de surface (1) et/ou dans l'entrepôt à rayonnages en hauteur (2).

13. Système de stockage selon la revendication 12,
**caractérisé en ce que** plusieurs appareils de transport peuvent être couplés entre eux.

14. Système de stockage selon l'une des revendications précédentes, **caractérisé en ce que** les lignes de stockage (1.1, 1.2, 1.3, ..., 1.n ; 2.1, 2.2, 2.3, ... ; 2.n) d'un couloir de lignes de stockage (11, 12) ne sont pas toutes disposées dans un premier plan commun (10).
